# EUROPEAN PATENT SPECIFICATION

(11) **EP 3 389 803 B1**
(45) Date of publication and mention of the grant of the patent: **11.08.2021**
(21) Application number: 15910858.8
(22) Date of filing: 14.12.2015
(51) Int. Cl.: A63F 13/214, G06F 16/00, G06K 19/06, G09B 19/00, A63B 21/00, G09B 5/02

(54) **AN EXERCISE DEVICE INCLUDING AN OPTICALLY READABLE CODE**
ÜBUNGSVORRICHTUNG MIT EINEM OPTISCH LESBAREN CODE
DISPOSITIF D'EXERCICE COMPRENANT UN CODE OPTIQUEMENT LISIBLE

(43) Date of publication of application: 24.10.2018
(73) Proprietor: Procedos AB, 271 72 Köpingebro (SE)
(72) Inventor: DERWINGER, Jens, 27172 Köpingebro (SE); RONLAND, Seth, 27195 Ystad (SE)
(74) Representative: Ström & Gulliksson AB
(86) International application number: PCT/SE2015/051336
(87) International publication number: WO 2017/105298

(56) References cited:
- WO-A1-2014/006497
- GB-A- 2 425 730
- US-A1- 2012 046 103
- US-A1- 2013 157 785
- US-A1- 2014 142 459
- US-A1- 2014 166 739
- US-A1- 2014 166 739
- None

## Description

### FIELD OF THE INVENTION

The invention relates to an exercise device. More specifically, the present invention relates to an exercise device for physical training of the human body. Exercise devices of this type are generally used to improve cardiovascular and/or musculoskeletal abilities of a person. Such devices are, for example, used for rehabilitation, conditioning, fitness training, strength improvement, building of muscles, improving flexibility, body toning, weight loss, etc.

This type of exercise device comprises a platform having a top surface exercise area with a plurality of positioning markings for a plurality of different user hand and/or feet positioning combinations, wherein the hands and/or feet are moved between different positioning markings according to a predetermined training program. Such exercise devices are intended for training by moving the hands and/or feet of a person into different predetermined positions in a predetermined sequence. For example, the body weight of the user can be used as the only mass to be moved. Such exercise devices can be used at practically any location, such as at home, at gyms, etc.

### PRIOR ART

There are several different types of exercise devices in the prior art. One such type of device is for example disclosed in US7820777. The device disclosed in US7820777 comprises a mat having a top surface with a plurality of panels. Each panel includes a set of concentric squares indicia, in which an upper halt of each square has a dotted line for fingertip placement, and a lower half has a solid line for palm placement, so as to facilitate body positioning for push-up exercises Document US 2014166739 discloses a process and apparatus utilizing QR exercise mats including scanning QR codes printed on an exercise mat with a tablet computer or hand-held mobile device.

A problem with such exercise devices according to prior art is that it can be difficult to position the body correctly.

Another problem of such prior art devices is that they are limited in use.

### SUMMARY OF THE INVENTION

An object of the present invention is to avoid the problems of the prior art and provide an improved exercise device, system and method. The present invention results in the possibility of providing different types of training for several different purposes. Further, the present invention results in the possibility of providing the user with an individual training program in a simple and efficient manner for effective training adapted to the user.

The present invention relates to a device for physical training of a user as defined in independent claims 1, 14 and 15.

Further characteristics and advantages of the present invention will become apparent from the description of the embodiments below, the appended drawings and the dependent claims.

### SHORT DESCRIPTION OF THE DRAWINGS

The invention will now be described more in detail with the aid of embodiments and with reference to the appended drawings, in which
Fig. 1 is a schematic top view of an exercise device according to one embodiment,
Fig. 2 is a schematic top view of an exercise device according to one alternative embodiment,
Fig. 3 is a schematic top view of an exercise device according to another alternative embodiment,
Fig. 4 is a schematic view of an exercise system according to one embodiment, and
Fig. 5 is a schematic view of an exercise system according to another embodiment.

### THE INVENTION

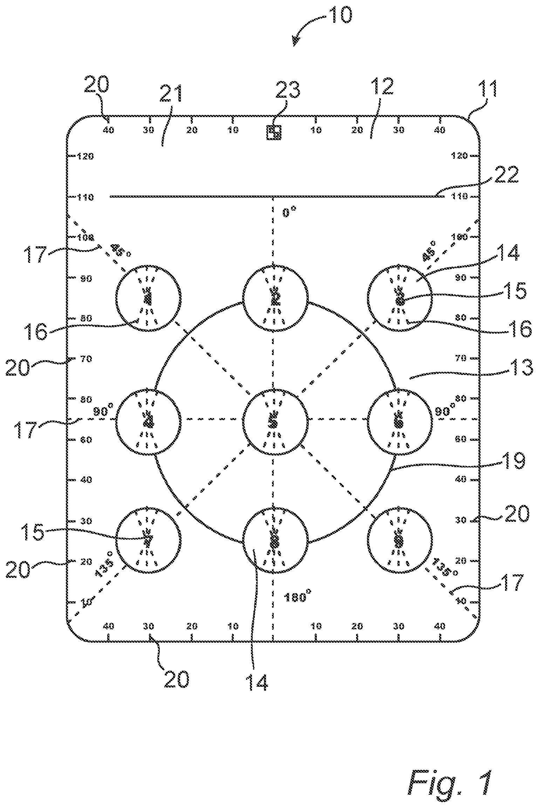

Referring to Fig. 1 an exercise device 10 is illustrated schematically according to one embodiment. The exercise 10 is arranged for physical training of a user. For example, the exercise device 10 is arranged for cardiovascular training, musculoskeletal training and flexibility training. Further, optionally the exercise device 10 is also arranged for mental training of the user, e.g. for training concentration, multitasking abilities and similar, balance and body control. For example, the exercise device 10 is adapted for training by means of body movement alone, without any further load or additional weights. Hence, the exercise device 10 is, for example, arranged for training with only the body weight of the user.

The exercise device 10 comprises a platform 11 having a top surface 12 with an exercise area 13 for the user to perform a training program on. The platform 11 also has a bottom surface for contacting a supporting surface, such as a floor or ground. Alternatively, the bottom surface is arranged for contacting a supporting surface in the form of a wall, ceiling or similar. According to one embodiment the platform 11 is arranged as a mat, such as a flexible mat, comprising, e.g. rubber, textile materials, polymer materials or similar. For example, the platform 11 is a mat of vinyl or other suitable plastic materials. Alternatively, the platform 11 comprises polychloroprene (neoprene) or is formed as a textile mat having a rubber backing. For example, the platform 11 is substantially rectangular, having four edges and four peripheral portions adjacent the four edges. In the illustrated embodiment, the platform comprises a top edge, a bottom edge and two opposite side edges connecting the top and bottom edges and forming left and right edges. For example, the platform 11 is arranged with a length between the top and bottom edges of 100-170 cm or 120-150 cm, such as about 130 cm. For example, the platform 11 is arranged with a width between the left and right edges of 80-120 cm, such as about 100 cm.

The exercise area 13 on the top surface 12 of the platform 11 comprises a plurality of positioning markings 14 for indicating to a user where the user should position one or more of the hands and/or one or more of the feet in accordance with a predetermined training program. The positioning markings 14 are distributed over the exercise area 13. In the illustrated embodiment, the positioning markings 14 are arranged with a gap between them. A distance between the centre of two adjacent position markings 14 is for example 20-40 cm or about 30 cm. The platform 11 comprises at least four positioning markings, at least five positioning markings or for example nine positioning markings 14. For example, the platform 11 comprises a central positioning marking 14, wherein the remaining positioning markings are distributed around the central positioning marking 14. In the illustrated embodiment the positioning markings 14 are arranged in parallel rows. For example, the positioning markings 14 are arranged in three parallel rows, e.g. having three positioning markings 14 in each of the rows. The positioning markings 14 are for example circular, rectangular, elliptic, square-shaped, triangular, pentagonal, hexagonal, octagonal or formed as animals, faces, or similar. Optionally, the positioning markings 14 are provided with different symbols 15, such as numbers, for identifying the positioning markings 14. Alternatively, the symbols 15 are letters or other types of signs for identifying each of the positioning markings 14. For example, the positioning markings 14 are numbered from one and onwards, such as from one to nine as in the illustrated embodiment. For example, the symbols are arranged within the positioning markings 14.

In the illustrated embodiment, the positioning markings 14 comprise angle indications 16 indicating different angles for positioning a hand or foot of the user in a predetermined angle on the positioning markings 14. For example, the positioning markings 14 comprise a plurality of angle markings 16, such as three or more. In the illustrated embodiment, the angle indications 16 extend from a centre of the positioning markings 14 and towards a periphery thereof. In the illustrated embodiment, the angle indications 16 are arranged as lines, such as dashed lines. For example, the angle indications 16 are lines extending across the positioning markings 14 or shorter lines at the periphery thereof. For example, each of the positioning markings 14 comprises six angle indications extending from the centre thereof, such as three forward and three backward angle indications. For example, the angle indications 16 are arranged in 20 degrees intervals. For example, a first angle indication 16 extends in a direction between the top and bottom edges of the platform 11, wherein others extend in a direction 20 degrees offset from the first angle indication 16.

In the illustrated embodiment the exercise area 13 of the platform 11 comprises angle markings 17 indicating different angles across the exercise area 13. For example, the angle markings 17 indicate different angles from a centre of the exercise area 13, wherein the angle markings 17 are distributed around said centre. The angle markings 17 are, for example, arranged as lines, such as dashed lines. For example, the angle markings 17 are interrupted over the positioning markings 14. For example, the exercise area 13 comprises at least four angle markings 17 extending from the centre of the exercise area 13. Preferably, the exercise area 13 comprises eight angle markings 17 evenly distributed around the centre of the exercise area 13 as illustrated in the drawings. For example, the angles of the angle markings 17 are set out on the platform 11 by means of angle numbers 18. In the illustrated embodiment, the angle markings 17 are arranged at 0, 45, 90, 135 and 180 degrees, wherein both left and right hand sides are provided with the 45, 90 and 135 degree angle numbers 18. Further, the angle numbers 18 are indicated in an area between the periphery of the platform 11 and the positioning markings 14.

In the illustrated embodiment the exercise area is provided with a central area marking 19. The central area marking 19 is arranged in the central area of the exercise area 13 to indicate to the user the location of the central area 13 of the platform 11. The central area marking 19 is larger than a positioning marking 14 and, e.g. surrounds at least one positioning marking 14, such as the central positioning marking. For example, the central area marking 19 is circular. The central area marking 19 comprises for example a line, such as a dashed line indicating the periphery of the central area marking 19. Alternatively, the central area marking 19 is formed by a colored field on the exercise area 13.

According to one embodiment the platform 11 comprises distance markings 20 indicating predetermined distance intervals along at least one edge of the platform 11. For example, a plurality of distance markings 20 is arranged along the periphery of the platform 11, such as along opposite peripheral portions thereof or along four peripheral portions thereof. For example, the distance markings 20 are arranged in 10 cm intervals. For example, the top and bottom edges of the platform 11 are provided with distance markings 20 from the centre thereof and outwards indicating corresponding intervals from the centre to the right as from the centre to the left in a mirrored configuration. For example, the side edges are provided with distance markings 20 from the bottom edge towards the top edge of the platform 11, indicating an increasing distance from said bottom edge.

In the illustrated embodiment the platform 11 is provided with an optional information area 21. The information area 21 is arranged adjacent the exercise area 13 and contains information for the user of different training exercises, training programs, etc. For example, the information area 21 is delimited from the exercise area 13 by means of a line 22 or similar indication. For example, the information area 21 is an area adjacent the top edge of the platform 11.

The platform 11 is provided with an optically readable code 23, such as a machine-readable barcode, e.g. in the form of a two-dimensional matrix barcode, also known as a Quick Response Code or QR code. For example, the optically readable code 23 is arranged in the information area 21. Alternatively, the optically readable code 23 is arranged in the exercise area 13. For example, the optically readable code 23 is arranged in a top central area of the information area 21, such as near the top edge of the platform 11.

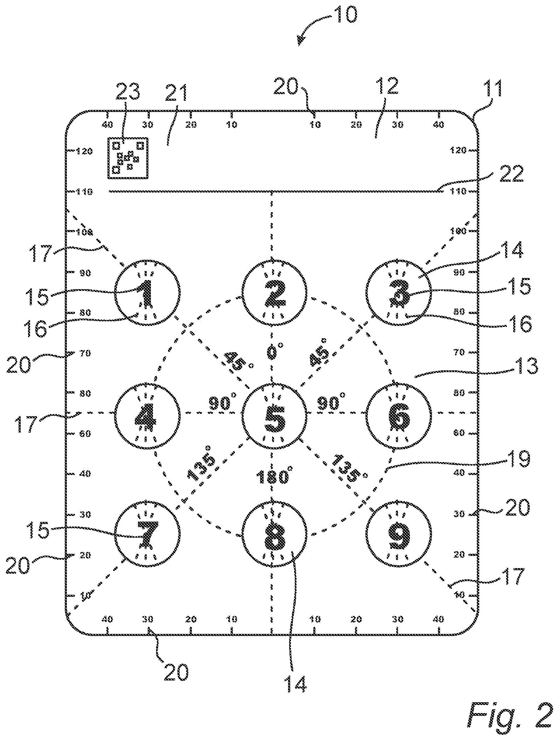

With reference to Fig. 2 one alternative embodiment of the exercise device 10 is illustrated. In the embodiment of Fig. 2 the angle numbers 18 indicating the values of the angle markings 17 are arranged inside the central area marking 19. For example, the angle numbers 18 are arranged between a central positioning marking 14 and remaining positioning markings 14. Further, according to the embodiment of Fig. 2, the symbol 15 within the positioning markings 14 is arranged with a height corresponding to at least one third of the height or diameter of the positioning marking 14. Further, the optically readable code 23 is arranged in a top left corner of the platform 11 in the information area 21.

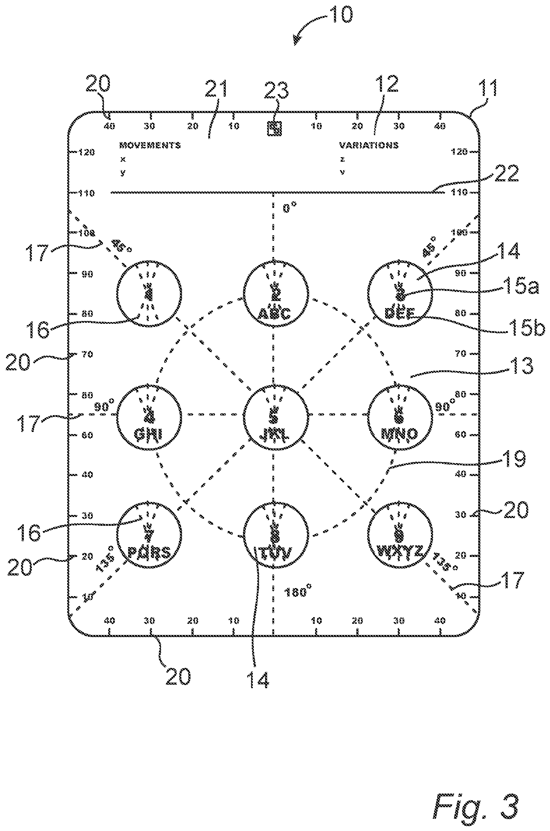

With reference to Fig. 3 another alternative embodiment of the exercise device 10 is illustrated. In the embodiment of Fig. 3 the positioning markings 14 are provided with the different symbols 15, wherein a plurality of positioning markings 14 are provided with a first symbol 15a and a second symbol 15b. The first and second symbols 15a, 15b are arranged within the positioning markings 14 together with the angle indications 16. The first symbol 15a is a number specific for each positioning marking 14, such as a consecutive number from one and onwards. Hence, one positioning marking 14 is provided with the first symbol 15a in the form of the number 1, wherein the next positioning marking 14 is provided with the first symbol 15a in the form of the number 2, etc. Alternatively, the first symbol 15a is a different type of symbol, such as an animal, a face or similar. For example, one positioning marking 14, such as the top left positioning marking 14 is provided with only the first symbol 15a, such as the number 1. The second symbol 15b is a series of letters, such as a three or four letter combination of alphabet consecutive letters. For example, except from the top left positioning marking 14 the remaining positioning markings 14 are provided with both the first and second symbols 15a, 15b. The first and second symbols 15a, 15b are, for example, for indicating specific positions in a training program. For example, a training program comprises numbers and/or words indicating, by means of the consecutive letters forming the words, positions for a user to place a hand or a foot in a specific order. Further, in the embodiment of Fig. 3 the information area 21 includes the optically readable code 23 and optionally information about movements and variations for training.

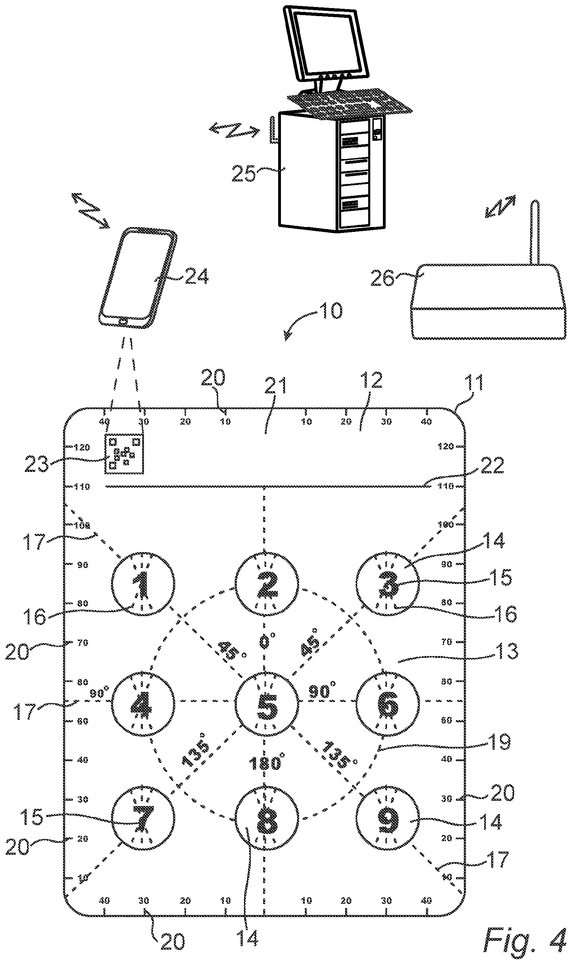

With reference to Fig. 4 an exercise system is illustrated according to one embodiment, wherein the exercise system comprises the training device 10, a mobile communication device 24 and a computer 25. The mobile communication device 24 is adapted to read the optically readable code 23 and communicate the information to the computer 25. Hence, the mobile communication device comprises an optical scanning function for scanning the optically readable code. For example, the mobile communication device 24 is a smartphone having a camera and software for reading the optically readable code 23. Further, the mobile communication device 24 comprises a display. The mobile communication device 24 is adapted to communicate with the computer 25, e.g. by means of conventional mobile communications systems and/or conventional local area wireless computer networking. Optionally the system also includes a router 26 for connecting the mobile communication device 24 to the computer 25 by conventional communication means.

The computer 25 comprises or is connected to a database of training programs. The database comprises a plurality of different predetermined training programs including sequences or patterns of movements for a user, which movements are related to the positioning markings 14 on the platform 11. For example, the training programs stored in the database include sequences or patterns of the symbols 15, or the first and/or second symbols 15a, 15b, to indicate a sequence of movements for the user. Hence the user positions hands and/or feet on the positioning markings 14 indicated by means of the sequence of symbols 15 in the training program. For example, the training program includes additional information, such as if it is a left foot or right foot that is to be moved, if any particular angle indicated by the angle indications 16 or angle markings 17 is to be used and if a movement a particular distance indicated by the distance markings 20 is to be performed. For example, a training program comprises the number indicated by the symbols 15 in the positioning markings 14. Alternatively, the training program comprises a mathematical task for the user to solve to get the correct position, such as addition, subtraction, multiplication tables, etc. Further, as mentioned above, the symbols 15 can comprise letters, wherein a training program can comprise words indicating a sequence of positions for the user to move between.

The optically readable code 23 is adapted to give access to the database, for example by logging in to a website or logging in to an account registered by the user or similar. Further, the optically readable code 23 contains an individual identification code for identifying the platform 11 and thereby the user. Hence, the optically readable code 23 is arranged to give access to the database of training programs and also identify the exercise device 10. For example, the optically readable code 23 is arranged to give access to the user account registered by the user. Hence, the optically readable code 23 contains database access information, such as a website or account login or similar, and the individual identification code. Alternatively, the optically readable code contains the database access information, e.g. in the form of login information to the database or a website connected to the database, wherein the individual identification code is provided separately, e.g. as a serial number code on the exercise device 10, which is entered into the system by means of an input device on the mobile communication device 24.

Hence, the user scans the optically readable code 23 by means of the mobile communication device 24, wherein the database access is activated, e.g. by means of the computer 25. By the individual identification code a predetermined training program is selected and retrieved from the database. The training program is, e.g. selected based on previous user specific information, such as age, gender, ambition, previous training sessions, etc. User specific information can be registered separately, e.g. by means of the mobile communication device 24 after accessing the database or logging in to the user account by means of the optically readable code. Hence, the computer 25 is adapted to select a training program from the database based on the user specific information. According to one embodiment, the computer 25 is arranged to receive training session information, such as training results, from the user, which the user, e.g. enters by means of the mobile communication device 24 after finishing a training program. Such training results are stored and used for comparison with other users and to select subsequent training programs, e.g. by means of the computer 25. The selected training program is forwarded to the user, such as to the mobile communication device 24 or to a separate display connected to the computer 25 or the mobile communication device 24.

According to one embodiment the computer 25 is adapted to categorize different users based on registered user specific information, such as based on age, length, weight, gender, profession, etc. Further, the computer 25 is adapted to receive and store training results registered by users. For example, users can then compare their results with other users of the same category. According to one embodiment the computer 25 is adapted to select and forward a predetermined training program or a competition to a plurality of users, such as users of a specific category who signed up for the common training program or competition. According to one embodiment the computer 25 is adapted to forward curves and/or graphs of training results to the users.

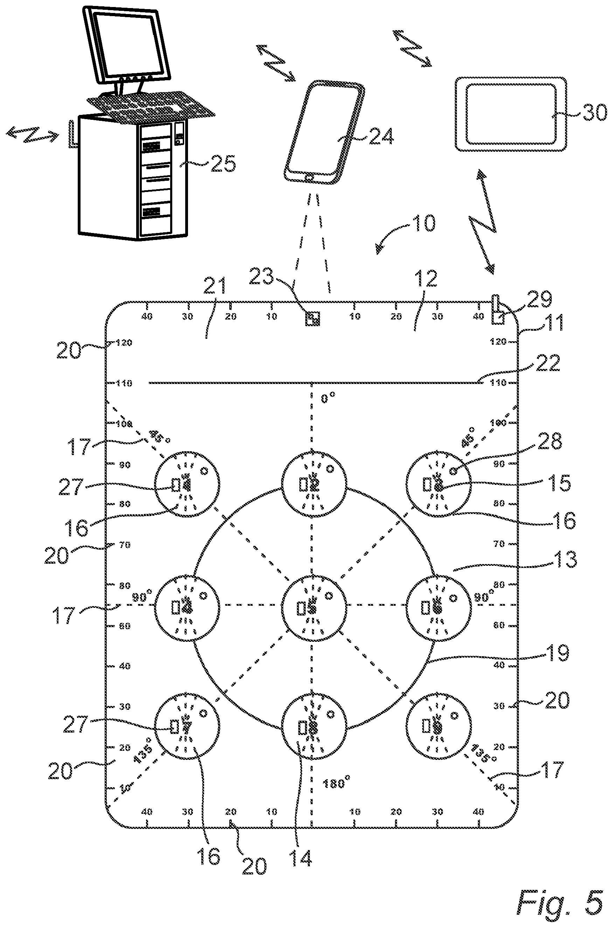

With reference to Fig. 5 another embodiment of the exercise device and system is illustrated. In the embodiment of Fig. 5 the platform 11 comprises the positioning markings 14 with the individual symbols 15 and the angle indications 16. Further, the platform 11 comprises the angle markings 17, angle numbers 18, the central area marking 19, the distance markings 20 and the optically readable code 23 as described above. In the embodiment of Fig. 5 the platform 11 comprises sensors 27 for detecting contact with the platform 11. For example, the sensors 27 are arranged to detect force applied to the exercise area 13. A plurality of sensors 27 can be distributed over the exercise area 13, such as in the positioning markings 14, to detect when the user contacts the exercise area 13 or a specific positioning marking 14. For example, each of the positioning markings 14 is provided with a sensor 27 for detecting force applied to the positioning marking 14 and thereby detect when the user places e.g. a hand or a foot on a specific positioning marking 14. For example, the exercise system includes a time measurement function for measuring how long it takes for a user to complete a training program, move between different positions during a training program, etc. For example, the time measurement function is adapted to measure a reaction time of the user, such as the time it takes for the user to position the hand or foot on a specific positioning marking 14 after the computer 25 forwards such information.

In the illustrated embodiment the platform comprises light sources 28, such as light diodes or similar. For example, each of the positioning markings 14 comprises a light source 28. The light sources 28 are arranged to indicate to the user on which positioning marking 14 a hand or foot is to be placed. The light sources 28 are for example arranged to measure a reaction time of the user, wherein the light sources 28 and the time measurement function of the system are connected. For example, the platform 11 is provided with one or more speakers (not illustrated) for communicating sounds to the user as part of a training program. The platform 11 can also be provided with one or more vibrating devices (not illustrated) for communicating tactile indications to the user.

In Fig. 5 the platform 11 is provided with a connecting device 29 for connecting the platform 11 to a display 30, such as a tablet computer (iPad), flat panel display or similar. The platform 11 is connected to the display 30 through the connecting device 29 by means of a cable or wirelessly, such as by WLAN (WiFi), bluetooth or similar. For example, the connecting device 29 is a transmitter/receiver for transmitting information to and receiving information from the display 30, the mobile communication device 24 and/or the computer 25. Further, the display 30 and/or the platform 11 can be provided with processing devices, memory devices and data storage devices. For example, the display 30 is connected to the computer 25 and the database of training programs associated therewith. Further, according to one embodiment, the sensors 27 and/or light sources 28 and optionally the speakers and vibrating devices are connected to the connecting device 29. For example, the display 30 comprises a scanning function, such as a camera and software for reading the optically readable code 23. Hence, after scanning the optically readable code 23 by means of the mobile communication device 24 or the display 30 the user receives from the database of training programs a user specific training program through the computer 25, which forwards the training program to the display 30 or the mobile communication device 24 as a sequence of steps indicated on the display 30 or the mobile communication device 24 and/or by means of the light sources 28, speakers vibrating devices, etc. The user performs the steps indicated on the display 30 or the mobile communication device 24 and/or by means of the light sources 28, speakers vibrating devices, etc., wherein the sensors 27 and the time measurement function registers the performance of the user, and wherein the performance of the user is stored in a database by means of the computer.

## Claims

1. An exercise device (10) for physical training of a user, comprising a platform (11) having a top surface (12) exercise area (13) with a plurality of positioning markings (14) for a plurality of different user hand and/or feet position combinations according to a predetermined training program,
***characterised* in**
**that** the platform (11) comprises an optically readable code (23) for access to a database of predetermined training programs, and
**that** the platform (11) is provided with an individual identification code for identification of the platform (11) and for retrieving a specific predetermined training program related to said code from the database of training programs.

2. An exercise device according to claim 1, wherein the platform (11) comprises a plurality of angle markings (17) indicating different angles from a centre point of the exercise area (13) of said top surface (12).

3. An exercise device according to claim 2, wherein the angle markings (17) extend between a periphery and the centre point of the exercise area (13).

4. An exercise device according to claim 2 or 3, wherein eight angle markings (17) are angularly distributed around the centre point of the exercise area (13).

5. An exercise device according to any of the preceding claims, wherein the positioning markings (14) comprise a plurality of angle indications (16) for indicating different angles from a centre point of the positioning markings (14).

6. An exercise device according to claim 5, wherein the angle indications (16) extend across the positioning markings (14).

7. An exercise device according to claim 5 or 6, wherein each positioning marking (14) comprise six angle indications extending from the centre point of the positioning marking (14).

8. An exercise device according to any of the preceding claims, wherein the exercise area (13) comprises a central area marking (19) indicating a central area of the exercise area (13) and surrounding at least one positioning marking (14).

9. An exercise device according to any of the preceding claims, wherein the positioning markings (14) comprise individual symbols (15) specific for each of the positioning markings (14).

10. An exercise device according to claim 9, wherein the positioning markings (14) comprise a first symbol (15a) in the form of a number, and a second symbol (15b) in the form of one or more letters.

11. An exercise device according to any of the preceding claims, wherein the platform top surface (12) comprises peripheral distance markings (20) indicating predetermined distance intervals along the periphery of the platform (11).

12. An exercise device according to any of the preceding claims, wherein the platform (11) comprises sensors (27) for detecting contact against the exercise area (13) or predetermined positions thereof.

13. An exercise device according to any of the preceding claims, wherein the platform (11) comprises a connecting device (29) for connecting the platform (11) to a display (30).

14. A system for physical training of a user, comprising an exercise device (10) according to any of the preceding claims, a mobile communication device (24), a computer (25) and the database of predetermined training programs, wherein the mobile communication device (24) comprises an optical scanning function for scanning the optically readable code (23) to get access to the database of training programs, wherein the mobile communication device (24) is adapted to forward the individual identification code to the computer (25), wherein the computer (25) is adapted to identify the exercise device (10) by means of the individual identification code, retrieve the predetermined training program associated with the individual identification code, retrieve the predetermined training program associated with the individual identification code and forward it to the user.

15. A method for physical training of a user, comprising the steps of
a) by means of a mobile communication device (24) scanning an optically readable code (23) on an exercise device (10) according to any of claims 1-13,
b) forwarding an individual identification code provided on the platform (11) to a computer (25),
c) selecting from a database of training programs a specific predetermined training program based on the individual identification code,
d) forwarding the selected training program to the user, and
e) displaying the selected training program on a display.

## Patentansprüche

1. Übungsvorrichtung (10) zum körperlichen Training eines Benutzers, umfassend eine Plattform (11) mit einem Übungsbereich (13) auf der Oberseite (12) mit einer Vielzahl von Positionsmarkierungen (14) für eine Vielzahl von verschiedenen Kombinationen der Hand- und/oder Fußposition des Benutzers gemäß einem vorbestimmten Trainingsprogramm, ***dadurch gekennzeichnet,* dass**
dass die Plattform (11) einen optisch lesbaren Code (23) für den Zugang zu einer Datenbank mit vorbestimmten Ausbildungsprogrammen umfasst, und dass die Plattform (11) mit einem individuellen Identifikationscode versehen ist, um die Plattform (11) zu identifizieren und um ein spezifisches vorbestimmtes Übungsprogramm, das sich auf den Code bezieht, aus der Datenbank der Übungsprogramme abzurufen.

2. Übungsvorrichtung nach Anspruch 1, wobei die Plattform (11) eine Vielzahl von Winkelmarkierungen (17) aufweist, die verschiedene Winkel von einem Mittelpunkt des Übungsbereichs (13) der oberen Fläche (12) anzeigen.

3. Übungsvorrichtung nach Anspruch 2, wobei sich die Winkelmarkierungen (17) zwischen einer Peripherie und dem Mittelpunkt des Übungsbereichs (13) erstrecken.

4. Übungsvorrichtung nach Anspruch 2 oder 3, bei dem acht Winkelmarkierungen (17) winklig um den Mittelpunkt des Übungsbereichs (13) verteilt sind.

5. Übungsvorrichtung nach einem der vorstehenden Ansprüche, wobei die Positionierungsmarkierungen (14) eine Vielzahl von Winkelangaben (16) zum Anzeigen verschiedener Winkel von einem Mittelpunkt der Positionierungsmarkierungen (14) umfassen.

6. Übungsvorrichtung nach Anspruch 5, wobei sich die Winkelangaben (16) über die Positionierungsmarkierungen (14) erstrecken.

7. Übungsvorrichtung nach Anspruch 5 oder 6, wobei jede Positionierungsmarkierung (14) sechs Winkelangaben umfasst, die sich vom Mittelpunkt der Positionierungsmarkierung (14) aus erstrecken.

8. Übungsvorrichtung gemäß einem der vorstehenden Ansprüche, wobei der Übungsbereich (13) eine Zentralbereichsmarkierung (19) aufweist, die einen Zentralbereich des Übungsbereichs (13) anzeigt und mindestens eine Positionierungsmarkierung (14) umgibt.

9. Übungsvorrichtung nach einem der vorstehenden Ansprüche, wobei die Positionierungsmarkierungen (14) individuelle Symbole (15) umfassen, die für jede der Positionierungsmarkierungen (14) spezifisch sind.

10. Übungsvorrichtung nach Anspruch 9, wobei die Positionierungsmarkierungen (14) ein erstes Symbol (15a) in Form einer Zahl und ein zweites Symbol (15b) in Form eines oder mehrerer Buchstaben umfassen.

11. Übungsvorrichtung nach einem der vorstehenden Ansprüche, wobei die Plattformoberseite (12) periphere Abstandsmarkierungen (20) aufweist, die vorbestimmte Abstandsintervalle entlang des Umfangs der Plattform (11) anzeigen.

12. Übungsvorrichtung nach einem der vorstehenden Ansprüche, wobei die Plattform (11) Sensoren (27) zum Erfassen eines Kontakts mit dem Übungsbereich (13) oder vorbestimmten Positionen desselben aufweist.

13. Übungsvorrichtung gemäß einem der vorstehenden Ansprüche, wobei die Plattform (11) eine Verbindungsvorrichtung (29) zum Verbinden der Plattform (11) mit einer Anzeige (30) aufweist.

14. System zum körperlichen Training eines Benutzers, umfassend eine Übungsvorrichtung (10) gemäß einem der vorhergehenden Ansprüche, eine mobile Kommunikationsvorrichtung (24), einen Computer (25) und die Datenbank von vorbestimmten Trainingsprogrammen, wobei die mobile Kommunikationsvorrichtung (24) eine optische Abtastfunktion zum Abtasten des optisch lesbaren Codes (23) umfasst, um Zugang zu der Datenbank von Übungsprogrammen zu erhalten, wobei die mobile Kommunikationsvorrichtung (24) dazu ausgelegt ist, den individuellen Identifikationscode an den Computer (25) weiterzuleiten, wobei der Computer (25) dazu ausgelegt ist, die Übungsvorrichtung (10) mittels des individuellen Identifikationscodes zu identifizieren, das dem individuellen Identifikationscode zugeordnete vorbestimmte Übungsprogramm abzurufen, das dem individuellen Identifikationscode zugeordnete vorbestimmte Übungsprogramm abzurufen und es an den Benutzer weiterzuleiten.

15. Verfahren zur physischen Übung eines Benutzers, das die folgenden Schritte umfasst
a) mit Hilfe einer mobilen Kommunikationsvorrichtung (24), die einen optisch lesbaren Code (23) auf einem Übungsvorrichtung (10) gemäß einem der Ansprüche 1 bis 13 abtastet,
b) Weiterleitung eines auf der Plattform (11) bereitgestellten individuellen Identifikationscodes an einen Computer (25),
c) aus einer Datenbank von Übungsprogrammen ein spezifisches vorbestimmtes Übungsprogramm auf der Grundlage des individuellen Identifikationscodes auszuwählen, d) das ausgewählte Übungsprogramm an den Benutzer weiterzuleiten und e) das ausgewählte Übungsprogramm auf einem Display anzuzeigen.

## Revendications

1. Dispositif d'exercice (10) pour l'entraînement physique d'un utilisateur, comprenant une plate-forme (11) ayant une surface supérieure (12), une zone d'exercice (13) avec une pluralité de repères de position (14) pour une pluralité de combinaisons différentes de positions des mains et/ou des pieds de l'utilisateur selon un programme d'entraînement prédéterminé, ***caractérisé* en ce que**
que la plate-forme (11) comprend un code (23) lisible optiquement pour l'accès à une base de données de programmes de formation prédéterminés, et
que la plate-forme (11) est dotée d'un code d'identification individuel pour l'identification de la plate-forme (11) et pour la récupération d'un programme de formation spécifique prédéterminé lié audit code dans la base de données des programmes de formation.

2. Dispositif d'exercice selon la revendication 1, dans lequel la plate-forme (11) comprend une pluralité de repères angulaires (17) indiquant différents angles à partir d'un point central de la zone d'exercice (13) de ladite surface supérieure (12).

3. Dispositif d'exercice selon la revendication 2, dans lequel les repères angulaires (17) s'étendent entre une périphérie et le point central de la zone d'exercice (13).

4. Appareil d'exercice selon les revendications 2 ou 3, dans lequel huit repères angulaires (17) sont répartis angulairement autour du point central de la zone d'exercice (13).

5. Dispositif d'exercice selon l'une des revendications précédentes, dans lequel les repères de positionnement (14) comprennent une pluralité d'indications angulaires (16) pour indiquer différents angles à partir d'un point central des repères de positionnement (14).

6. Dispositif d'exercice selon la revendication 5, dans lequel les indications angulaires (16) s'étendent à travers les repères de positionnement (14).

7. Dispositif d'exercice selon les revendications 5 ou 6, dans lequel chaque repère de positionnement (14) comprend six indications angulaires s'étendant à partir du point central du repère de positionnement (14).

8. Dispositif d'exercice selon l'une des revendications précédentes, dans lequel la zone d'exercice (13) comprend un repère de zone centrale (19) indiquant une zone centrale de la zone d'exercice (13) et entourant au moins un repère de positionnement (14).

9. Dispositif d'exercice selon l'une des revendications précédentes, dans lequel les repères de positionnement (14) comprennent des symboles individuels (15) spécifiques à chacun des repères de positionnement (14).

10. Dispositif d'exercice selon la revendication 9, dans lequel les repères de positionnement (14) comprennent un premier symbole (15a) sous la forme d'un nombre, et un second symbole (15b) sous la forme d'une ou plusieurs lettres.

11. Dispositif d'exercice selon l'une des revendications précédentes, dans lequel la surface supérieure de la plate-forme (12) comprend des repères de distance périphérique (20) indiquant des intervalles de distance prédéterminés le long de la périphérie de la plate-forme (11).

12. Dispositif d'exercice selon l'une des revendications précédentes, dans lequel la plate-forme (11) comprend des capteurs (27) pour détecter un contact avec la zone d'exercice (13) ou des positions prédéterminées de celle-ci.

13. Dispositif d'exercice selon l'une des revendications précédentes, dans lequel la plate-forme (11) comprend un dispositif de connexion (29) pour relier la plate-forme (11) à un écran (30).

14. Système pour l'entraînement physique d'un utilisateur, comprenant un dispositif d'exercice (10) selon l'une des revendications précédentes, un dispositif de communication mobile (24), un ordinateur (25) et la base de données de programmes d'entraînement prédéterminés, dans lequel le dispositif de communication mobile (24) comprend une fonction de balayage optique pour balayer le code (23) lisible par voie optique afin d'obtenir l'accès à la base de données de programmes d'entraînement, dans lequel le dispositif de communication mobile (24) est conçu pour transmettre le code d'identification individuel à l'ordinateur (25), dans lequel l'ordinateur (25) est adapté pour identifier le dispositif d'exercice (10) au moyen du code d'identification individuel, récupérer le programme d'entraînement prédéterminé associé au code d'identification individuel, récupérer le programme d'entraînement prédéterminé associé au code d'identification individuel et le transmettre à l'utilisateur.

15. Procédé pour l'entraînement physique d'un utilisateur, comprenant les étapes suivantes:
a) au moyen d'un dispositif de communication mobile (24), le scan d'un code (23) lisible optiquement sur un appareil d'exercice (10) selon l'une des revendications 1 à 13,
b) la transmission d'un code d'identification individuel fourni sur la plate-forme (11) à un ordinateur (25),
c) la sélection dans une base de données de programmes de formation, d'un programme de formation spécifique prédéterminé en fonction du code d'identification individuel,
d) la transmission du programme de formation sélectionné à l'utilisateur, et
e) l'affichage du programme de formation sélectionné sur un écran.
